# FASCICULE DE BREVET EUROPEEN

(11) **EP 2 069 744 B1**
(45) Date de publication et mention de la délivrance du brevet: **16.08.2017**
(21) Numéro de dépôt: 07848245.2
(22) Date de dépôt: 17.09.2007
(51) Int. Cl.: G01M 15/00

(54) **SYSTEME DE SUPERVISION DE BANCS D'ESSAIS MOTEUR INDEPENDANT DU TYPE DE BANCS D'ESSAIS MOTEUR**
VON DER ART DES MOTORENPRÜFSTANDES UNABHÄNGIGES SYSTEM ZUR MOTORENPRÜFSTANDÜBERWACHUNG
SYSTEM FOR SUPERVISING ENGINE TEST BEDS WHICH IS INDEPENDENT OF THE TYPE OF ENGINE TEST BED

(30) Priorité: 27.09.2006 FR 0608543
(43) Date de publication de la demande: 17.06.2009
(73) Titulaire: IFP Énergies nouvelles, 92852 Rueil-Malmaison Cedex (FR)
(72) Inventeur: OULD ABDELLAHI, Mohamed, F-92400 Courbevoie (FR)
(86) Numéro de dépôt international: PCT/FR2007/001508
(87) Numéro de publication internationale: WO 2008/037868

(56) Documents cités:
- WO-A-2005/116605
- DE-A1- 10 325 349
- US-B1- 6 401 220
- US-B1- 6 507 842
- JEAN-FRANCOIS PEYRUCAT: MESURES, no. 733, mars 2001 (2001-03), pages 82-85, XP002435704

## Description

La présente invention concerne un système de supervision en temps réel de bancs d'essais moteur permettant de concevoir des essais moteurs en totale indépendance du banc d'essais moteur susceptible de l'accueillir.

### État de la technique

L'étude de moteurs thermiques ou électriques et des nombreux paramètres influant sur leurs comportements, ainsi que le respect de certaines normes (normes antipollution par exemple), rendent nécessaire les essais moteurs sur des bancs d'étude ou de certification. Du fait du nombre de paramètres de contrôle moteur en constante augmentation, via l'apparition de nouvelles technologies, les paramètres moteurs sont ajustés durant plusieurs phases de calibration moteur. Pour réduire le temps de mise au point d'un moteur, les centres d'essais doivent optimiser leurs méthodologies de travail et leurs équipements.

Les études réalisées sur banc d'essais moteurs permettent de conduire une étude complète du fonctionnement des moteurs à combustion interne, en étudiant l'influence des différents paramètres réglables sur le fonctionnement du moteur.

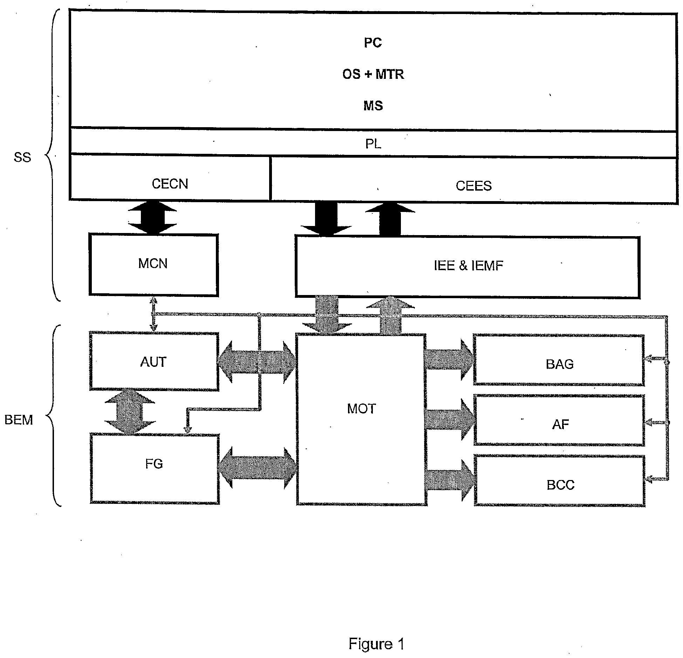

Un banc d'essai moteur est associé à un système de supervision (système d'acquisition et de pilotage) dont l'organisation logicielle permet de concevoir et piloter de tels essais moteurs. La figure 1 illustre une architecture matérielle classique associée à un système de supervision d'un banc d'essais moteur. Le banc d'essais moteur (BEM) est constitué du moteur (MOT) ainsi que des éléments suivants, qui permettent de piloter le moteur ou d'analyser son fonctionnement :
- frein ou génératrice (FG);
- automate (AUT);
- baie d'analyse de gaz (BAG) ;
- fumimètre (AF) ;
- balance de consommation en carburant (BCC).

Un logiciel de supervision de banc d'essais moteur (SOFTW) est généralement organisé sur la base d'une « configuration d'essai » décrivant les conditions d'acquisition, de pilotage et de définitions de séquences d'un essai moteur envisagé.

Une configuration d'essai peut être instruite par l'utilisateur par le biais d'un « éditeur de configuration d'essai » spécifique au logiciel de supervision.

Cette même configuration d'essai peut ensuite être exécutée par le logiciel de supervision proprement dit. Le logiciel de supervision est alors chargé d'accomplir les acquisitions des données demandées, l'évaluation temps réel des grandeurs demandées et le pilotage des consignes résultantes tout en garantissant une sécurisation des conditions d'expérimentation (surveillance permanente des sécurités). La définition des séquences de ces opérations est réalisée par le logiciel de supervision grâce au coeur temps réel de sa plate-forme informatique qui sollicite les cartes électroniques d'E/S et de communication numérique via les pilotes associés.

Selon l'organisation traditionnelle chaque configuration d'essai est dépendante des équipements spécifiques de chaque banc d'essais moteur. Lorsqu'une configuration d'essai a été conçue sur la base des équipements d'un banc d'essais moteur n°1, cette même configuration d'essais n'est pas directement portable sur le banc d'essais moteur n°2 en raison de l'hétérogénéité des équipements coûteux dédiés notamment aux fonctions de régulation du frein, d'analyse de gaz, d'analyse des fumées et de mesure des consommations de carburant. Cette portabilité est cependant réalisable en adaptant la configuration d'essai réalisée sur le banc moteur n°1 aux équipements du banc moteur n°2 par la modification de la déclaration et de l'identification des E/S spécifiques aux équipements du banc moteur n°2. La dépendance de la liste des E/S des équipements du banc d'essais moteur est directe avec la déclaration de la configuration d'essais. La nécessité de modification de ces déclarations dans le cas du portage de cette même configuration d'essai sur un autre banc moteur disposant d'équipements différents est alors inévitable.

La publication de JF Peyrucat dans le journal Mesures, no. 733, mars 2001,"La supervision intègre tous les standards du banc d'essai" est un exemple de l'état de la technique.

Par ailleurs, les documents US 6 401 220 B1 et US 6 507 842 B1 concernent d'autres exemples de systèmes de contrôle de séquences de test pour diverses applications. Les logiciels de supervision traditionnelle ne disposent que de pilotes pour gérer les équipements du banc moteur. Or chaque équipement de banc moteur requiert un paramétrage adapté à chaque essai : sélection des mesures à rapatrier, définition de la gamme des mesures, définition du format des résultats, etc. Ces opérations sont réalisées par l'utilisateur lors de la phase d'édition d'une configuration d'essai.

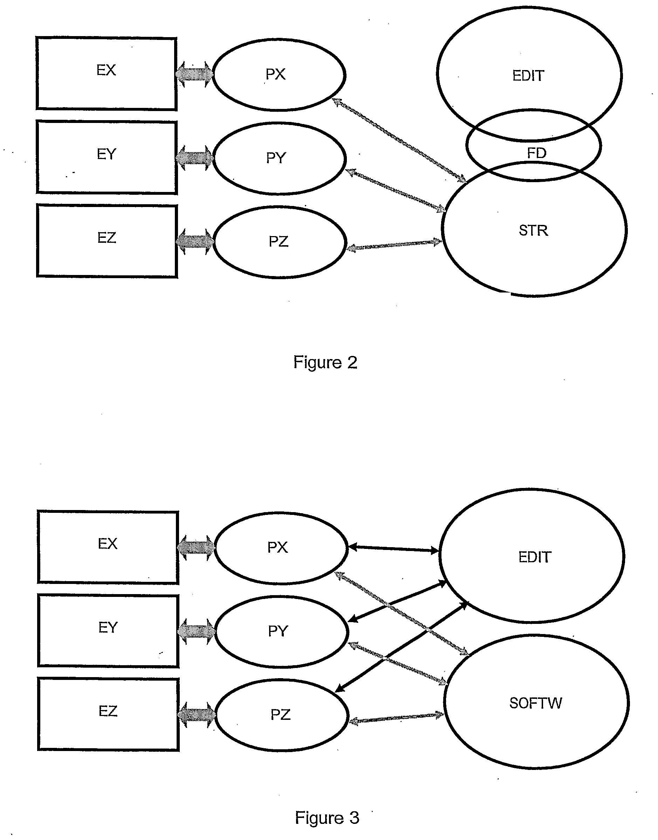

Pour un logiciel de supervision traditionnel (SOFTW), le paramétrage d'un pilote logiciel spécifique n'est pas intégré au logiciel de supervision car cela amène à modifier un tel logiciel chaque fois que l'on ajoute le support d'un nouveau pilote. Ce code est intégré spécifiquement au sein de chaque pilote comme le montre la figure 3, qui illustre trois types d'équipements (EX, EY et EZ) qui ont chacun leur pilote dédié : respectivement PX, PY, PZ. Ils communiquent avec un logiciel de supervision classique (SOFTW) et son logiciel d'édition (EDIT) associé. Ainsi chaque pilote doit intégrer à la fois le code des fonctions d'édition de son paramétrage spécifique (pour EDIT) et à la fois le code de gestion temps réel (pour SOFTW) de l'équipement concerné.

Cette organisation est d'autant plus contraignante qu'elle nécessite de gérer au sein de chaque pilote les différents environnements d'exploitation compatibles pour l'édition de ses paramètres spécifiques. En général, le code de la boîte de dialogue Windows® (Microsoft, USA) est directement intégré au sein du pilote.

Enfin, ces différents systèmes de pilotage d'un banc d'essai moteur ne permettent pas de réaliser conjointement un contrôle moteur.

Le système de supervision en temps réel selon l'invention comporte une organisation logicielle permettant de percevoir des essais moteurs en totale indépendance du banc d'essais moteur (et donc des équipements matériels spécifiques) susceptible de l'accueillir, tout en intégrant un système de contrôle moteur.

### La méthode selon l'invention

La présente invention concerne un système d'acquisition et de pilotage (SS) en temps réel de bancs d'essais moteurs comportant une plate-forme informatique (PC), un environnement d'exploitation logicielle (OS) associé à un module temps réel (MTR). Ce système comporte les éléments suivants :
- un fichier comportant des descriptions (FD) d'équipements et de pilotes associés à différents bancs d'essais moteur ;
- un ensemble de pilotes logiciels (PL) de gestion d'équipements de banc moteur, indépendants dudit environnement d'exploitation logicielle (OS) et de ladite plate-forme informatique (PC) ;
- un éditeur de configurations d'essai (EDIT) définies par des conditions d'acquisition et de pilotage d'un essai moteur, lesdites configurations étant indépendantes desdits pilotes logiciels (PL) et desdits équipements de banc moteur ;
- un logiciel de supervision temps réel (STR) chargé de lire des informations dudit fichier de description (FD), et chargé de l'exécution en temps réel des configurations d'essais issues dudit éditeur en réalisant un chargement de pilotes logiciels requis ; et dans lequel
- lesdits pilotes logiciels (PL) de gestion d'équipements de banc moteur communiquent en temps réel avec ledit logiciel de supervision temps réel (STR).

Selon un mode de réalisation, une configuration d'essai peut être définie au moyen de fonctions génériques de banc d'essais moteur. De façon avantageuse, le fichier de description (FD) peut être au format XML (eXtensible Markup Language). De même, l'éditeur de configuration d'essai (EDIT) peut utiliser des schémas au format XML.

Selon un autre mode de réalisation, le système d'acquisition et de pilotage (SS) comporte en sus un système de contrôle moteur. Ce système de contrôle moteur peut comporter un module de génération automatique de pilote de contrôle de moteur adapté à mettre en relation un moteur et le logiciel (STR). Selon l'invention, ce module de génération automatique de pilote de contrôle de moteur peut comporter les éléments suivants :
- un module de génération de modèle de contrôle moteur ;
- un module de compilation de modèle de contrôle moteur.

Dans le mode de réalisation comportant l'utilisation d'un pilote de contrôle, la plate-forme informatique (PC) peut partager de façon avantageuse sa ressource processeur entre des tâches de supervision de bancs d'essais moteurs et des tâches d'interprétation du pilote de contrôle.

D'autres caractéristiques et avantages du système de supervision en temps réel selon l'invention, apparaîtront à la lecture de la description ci-après d'exemples non limitatifs de réalisations, en se référant aux figures annexées et décrites ci-après.

### Présentation succincte des figures

- la figure 1 illustre une architecture matérielle classique associée à un système de supervision d'un banc d'essais moteur.
- la figure 2 illustre les communications entre les équipements et les logiciels d'édition et de supervision dans le cadre du système de supervision selon l'invention, via des pilotes génériques.
- la figure 3 illustre les communications entre les équipements et les logiciels d'édition et de supervision dans le cadre d'un système de supervision classique, via des pilotes dédiés.

### Description détaillée du système

Le système temps réel d'acquisition et de pilotage (SS) de bancs d'essais moteurs selon l'invention comporte les éléments suivants (figure 1) :
- une plate-forme informatique (PC) ;
- un environnement d'exploitation logicielle (OS) associé à un module temps réel (MTR) ;
- un module de supervision de banc d'essais moteur (MS) ;
- un ensemble de cartes électroniques (CEES) d'acquisition et de pilotage des entrées et des sorties. Ces entrées et sorties sont notées E/S ;
- un ensemble de cartes électroniques de communication numérique (CECN) ;
- un ensemble de multiplexage des communications numériques (MCN) ;
- un ensemble de « pilotes logiciels » (PL), couramment appelés « drivers ». Il peut s'agir :
   - des pilotes logiciels des différentes cartes électroniques. En général, un pilote est associé à chaque type de carte électronique ;
   - des pilotes d'équipements du banc d'essais moteur. En général, ces équipements sont accessibles via une communication numérique dédiée à laquelle est systématiquement associée un pilote d'interprétation du protocole de communication numérique adopté ;
- des interfaces électroniques de conditionnement et de mise en forme des entrées (IEE) et des interfaces électroniques de mise en forme et étages de puissance pour s'interfacer avec l'allumage et l'injection du moteur (IEMF).

La plate-forme informatique (PC) peut être un micro-ordinateur compatible PC. A titre d'exemple, la configuration de type PC suivante peut être utilisée pour mettre en oeuvre le système de supervision selon l'invention :
- Processeur Pentium 700 Mhz.
- Mémoire RAM : 128 Mo.
- Disque dur : 20Go ou plus.
- Lecteur CD-ROM : 32X ou plus.

Le système temps réel de supervision selon l'invention comporte un ensemble de modules logiciels (module de supervision (MS), module temps réel (MTR), pilotes (PL)) pouvant fonctionner sous les environnements d'exploitation logicielle (OS) suivants : Microsoft Windows NT4, 2000 et XP avec leur extension RTX de la société Ardence Inc. (USA). D'autres environnements d'exploitation peuvent être envisagés en adaptant le module temps réel (MTR). Il s'agit d'un exécutable temps réel, qui représente le noyau du système de supervision (SS). Il joue un rôle central dans l'exécution temps réel de l'application, et utilise une interface pilote afin de se connecter aux pilotes et les appeler au bon moment afin de réaliser l'acquisition et le pilotage de bancs d'essais moteurs. Ce module est lancé de manière transparente par le logiciel de supervision temps réel (STR) du module de supervision (MS). C'est lui qui est chargé de l'exécution temps réel des applications. Le module temps réel réalise les fonctions suivantes :
- ouverture, identification et communication avec les pilotes ;
- exécution des applications temps réelles ;
- communications avec le logiciel de supervision temps réel (STR).

Le système temps réel de supervision de bancs d'essais moteurs selon l'invention est basé sur un principe de « programmation objet ». Ce principe, développé dans le domaine de la programmation informatique avec notamment le langage C++, est appliqué, selon notre invention, au domaine de système de pilotage de bancs d'essais moteurs. En d'autres termes, le principe de « programmation objet » est étendu à la gestion de la supervision de bancs d'essais moteurs. Selon le principe de « programmation objet », toutes les composantes d'un programme d'ordinateur sont encapsulées dans des objets. Cette notion d'objet est essentielle en programmation industrielle car elle permet à chaque objet de disposer d'un ensemble de méthodes lui permettant de fonctionner. Par principe, toutes les variables nécessaires au fonctionnement d'un objet sont encapsulées au sein de la classe de l'objet considéré de sorte qu'aucune fonction logicielle extérieure à cet objet ne peut directement accéder à ces variables protégées. Cela ne peut être réalisé que par l'intermédiaire de «méthodes» (fonctions logicielles déclarées au sein de la classe objet considérée) associées à chaque objet.

Dans le cadre de système de supervision de bancs d'essais moteurs, ce principe permet de construire des systèmes avec une structure tout à fait particulière qui permet de concevoir des essais moteurs en totale indépendance du banc d'essais moteur (et donc des équipements matériels spécifiques) susceptible de l'accueillir. Un banc d'essais moteur devient un « objet ».

Ainsi le module de supervision de bancs d'essais moteur (MS) comporte les éléments suivants (figure 2) :
- un éditeur de configuration d'essai (EDIT), décrivant les conditions d'acquisition, de pilotage et de définitions de séquences d'un essai moteur envisagé ;
- un logiciel de supervision temps réel (STR) ;
- un fichier de description de la composition de différents bancs d'essais moteur (FD) ;

L'éditeur de configuration d'essai (EDIT) est un exécutable graphique qui permet à l'utilisateur d'écrire des configurations d'essai, à l'aide de menus, barres d'outils, objets graphiques, etc. De façon préférentielle cet éditeur utilise les schémas XML (eXtensible Markup Language). L'éditeur de configuration réalise l'ensemble des fonctions suivantes :
- chargement de la configuration d'un essai moteur à partir du XML ;
- interface homme/machine pour l'édition des configurations (applications qui représentent les essais à réaliser) ;
- interface homme/machine pour l'édition graphique des écrans de visualisation.

Le logiciel de supervision temps réel (STR) est une application qui interagit avec l'utilisateur pour exécuter un essai moteur. L'utilisateur dispose de menus et de fenêtres graphiques pour contrôler l'exécution de l'application. C'est cette application qui, de manière transparente à l'utilisateur, lance toutes les applications temps réel nécessaires à cette exécution. Ce logiciel permet à l'opérateur de banc d'exécuter les applications configurées par l'éditeur. Il réalise l'ensemble des fonctions suivantes :
- interface homme/machine ;
- interface avec les modules temps réel ;
- chargement de la configuration à partir du XML.

Le module de supervision de bancs d'essais moteur (MS) fait usage de l'unique fichier (FD) qui décrit la composition de tous les bancs d'essais moteurs que l'on souhaite utiliser. Il peut s'agir par exemple de tous les bancs d'essais moteurs d'une même société. Les informations décrites dans ce fichier et lues par le logiciel de supervision temps réel (STR), telles que la liste des équipements de chaque banc d'essais moteur et les fonctions respectives de chaque équipement distinct, sont répertoriées sous la forme de fonctions génériques disponibles sur tout banc d'essais susceptible d'accueillir un tel système de supervision. Le fichier de description FD peut être au format standard XML, pour faciliter sa gestion.

La figure 2 illustre également le fonctionnement d'un tel système de supervision. Cette figure peut être comparée avec la figure 3 qui illustre le fonctionnement d'un système de supervision classique. On comprend que dans le cas classique, l'édition d'une configuration particulière via l'éditeur EDIT se fait en fonction des différents pilotes (PX, PY, PZ) de chaque équipement (EX, EY, EZ). En revanche, selon le système de pilotage de notre invention, l'édition des configurations est totalement indépendante des pilotes et du type d'équipement. Qu'il s'agisse de EX et PX ou EY et PY, l'édition de la configuration reste inchangée.

La déclaration d'une configuration d'essai via l'éditeur EDIT est ainsi rendue totalement indépendante des équipements des bancs d'essais moteur puisqu'elle fait uniquement appel aux fonctions génériques d'un banc d'essais moteur destiné à accueillir un système de supervision (ex : fonction de mesure de la consommation du carburant, mesure du CO₂, mesure d'opacité des fumées, etc.). Le chargement implicite du driver de l'équipement requis est automatisé au sein du logiciel de supervision temps réel (STR) lors de l'exécution d'une configuration d'essais, grâce au fichier de description de la composition de différents bancs d'essais moteur (FD).

Les pilotes (PL) du système temps réel d'acquisition et de pilotage (SS) sont des modules logiciels indépendants qui permettent d'étendre les possibilités du système sans modifier l'existant. Ils peuvent être des exécutables Windows® (Microsoft, USA) ou RTX®. Les exécutables Windows® sont obligatoirement des pilotes asynchrones, alors que les exécutables RTX® peuvent être de type synchrone ou asynchrone. Les pilotes asynchrones sont des pilotes qui tournent de manière asynchrone par rapport au noyau, et ne bloquent donc pas son exécution. Ils peuvent ou non gérer un matériel. Les pilotes synchrones sont des exécutables temps réel RTX® qui tournent de manière synchrone avec le noyau du système temps réel (SS), et qui peuvent gérer ou non un matériel.

Les fichiers de définition des pilotes sont également de façon préférentielle au format XML, et contiennent deux types de données :
- Les données publiques qui informent le système temps réel (SS) sur les voies, tables, cartographies, et actions exportées par le pilote. Ces données décrivent par exemple le type des voies, la taille des tables, ou comment éditer ou afficher les actions du pilote.
- Les données privées sont particulières à chaque pilote, et peuvent être définies dans des schémas spécifiques à celui-ci. Par exemple l'adresse en hexadécimal d'une carte ou le nom d'un équipement géré par le pilote sont des exemples de ces données.

Ces pilotes nécessitent alors une interface permettant la communication entre le noyau et ces pilotes. Cette interface des pilotes est basée sur l'utilisation de mémoires partagées verrouillées en mémoires, ainsi que des objets de synchronisation (mutex, sémaphores, événements). Elle permet à des pilotes et des applications d'échanger des messages.

Pour exploiter au mieux la structure du module de supervision de bancs d'essais moteur (MS), le système de pilotage de bancs d'essais moteur comporte des pilotes (PL) pour gérer les équipements du banc moteur sans aucun code de paramétrage. Le paramétrage d'un équipement est enregistré au sein du fichier de description (FD). Aucun code de paramétrage n'est requis au sein des pilotes qui sont alors indépendants de l'environnement d'exploitation (ex : Windows NT4 SP6, Windows XP, adaptation de l'Interface Homme Machine à la langue du pays, etc...) et de la plate-forme de supervision. Ils sont optimisés dans l'unique objectif de gérer la relation temps réel de l'équipement considéré avec le coeur du logiciel de supervision STR.

Contrairement aux logiciels de supervision traditionnels qui ne disposent que des pilotes pour gérer les équipements du banc moteur, le logiciel de supervision STR peut s'appuyer à la fois sur des pilotes pour gérer les équipements du banc moteur et à la fois sur le fichier (FD) de description de tous les équipements de différents bancs moteur.

Cette séparation, entre les fonctions des pilotes logiciels des équipements matériels et la fonction de configuration d'un essai, est fondamentale, car chaque équipement de banc moteur requiert un paramétrage adapté à chaque essai : sélection des mesures à rapatrier, définition de la gamme des mesures, définition du format des résultats, etc. Ces opérations sont réalisées par l'utilisateur lors de la phase d'édition d'une configuration d'essai.

### Mode de réalisation avec contrôle moteur

Selon un mode de réalisation particulier du système de supervision de bancs d'essais moteur selon l'invention, celui-ci comporte en sus un système de contrôle moteur.

Un banc d'essai moteur destiné à accueillir un système de supervision peut réaliser la fonction de contrôle moteur de différentes manières :
- la première est de confier cette fonction à un calculateur moteur série qui accompagne généralement le faisceau du moteur. Cette première solution ne permet cependant pas à l'utilisateur d'accéder aux paramètres du contrôle moteur intégré au sein de ce calculateur moteur.
- la seconde solution consiste à remplacer le calculateur moteur série par un calculateur moteur de développement. Cette seconde solution est souvent conditionnée par le contrat d'étude moteur qui autorise ou non à disposer d'un tel équipement fourni souvent par le client (constructeur automobile ou équipementier). Si cette solution permet d'offrir un premier accès aux consignes et aux principaux résultats du contrôle moteur, elle ne permet pas d'accéder aux stratégies automatiques du contrôle moteur et limite l'accès des consignes à une interface (souvent PC portable) non pilotable de manière électronique.
- la troisième solution consiste à remplacer le calculateur moteur série par un système complet de développement en contrôle moteur tel que le système ACEbox® développé par l'IFP (France). Cette troisième solution permet d'offrir un accès total aux consignes, aux principaux résultats du contrôle moteur et aux stratégies automatiques du contrôle moteur et ce avec une interface totalement pilotable de manière électronique. Si cette solution convient totalement aux besoins de développement en contrôle moteur, elle reste destinée à des applications qui nécessitent de consacrer une ressource CPU (Central Processor Unit) totale au contrôle moteur.

Le système selon l'invention propose une quatrième solution lorsque les besoins du contrôle moteur ne nécessitent pas de consacrer une ressource CPU totale au contrôle moteur. Ce système comporte, en remplacement d'un calculateur moteur série, un système de contrôle moteur intégré au système de supervision (SS).

Selon ce mode de réalisation, la plate-forme informatique (PC) du système de supervision (SS) partage la ressource du processeur de la plateforme (CPU) entre deux tâches. La première est la tâche de supervision du banc d'essai. La seconde est la tâche d'interprétation d'un code compilé issu d'une modélisation automatique. Cette modélisation est réalisée sous une plateforme de conception pour la simulation de systèmes dynamiques multi-domaines.

Une telle plateforme peut par exemple consister en l'association de MATLAB® (MathWorks, USA) et Simulink ® (MathWorks, USA). MATLAB® est un logiciel dédié à la résolution de problèmes d'analyse numérique ou de traitement du signal. Il permet d'effectuer des calculs matriciels, de visualiser les résultats sous forme graphique. La formulation des problèmes s'apparente à la formulation mathématique des problèmes à résoudre. L'utilisation du logiciel consiste à lancer des lignes de commandes, qui peuvent le plus souvent s'apparenter à de la programmation en C. Simulink ® est une plateforme de conception pour la simulation de systèmes dynamiques multi-domaines basée sur la modélisation. Il fournit un environnement graphique interactif avec un ensemble de bibliothèques de blocs personnalisables qui permet de concevoir, avec précision des systèmes de contrôle/commande, de traitement du signal, de communication et d'autres systèmes qui varient dans le temps. MATLAB®, associé à Simulink ® par le biais d'une commande lancée sous MATLAB®, devient un outil graphique très simple d'utilisation pour la simulation de processus (programmation par copier/coller de blocs fonctionnels).

Le système de supervision de banc d'essais moteur comporte alors un module permettant de générer automatiquement un pilote de contrôle de moteur. Ce module comporte :
- un module de génération en temps réel de modèle de contrôle moteur ;
- un module de compilation en temps réel de modèle de contrôle moteur.

La compilation fournit le pilote de contrôle de moteur : l'utilisation de ces modules permet de transformer un modèle de contrôle moteur en un pilote pour le superviseur, capable de remplacer l'intelligence (cartographies, algorithmes, stratégies) du calculateur série du moteur.

Le moteur, et plus particulièrement son faisceau (câblage des capteurs et des actionneurs du moteur), est en relation avec le logiciel (STR) via des cartes électroniques d'E/S et des interfaces de conditionnement électronique (isolation galvanique, mise à l'échelle des mesures, etc.) et de puissance (bobines d'allumage, injecteurs, électrovannes, relais, etc.). Cette relation avec le logiciel (STR) est réalisée sous environnement d'exploitation Windows® via le pilote temps réel spécifique ainsi compilé. Celui-ci assure alors la fonction de contrôle du moteur.

Les avantages de cette solution sont évidents puisque l'on optimise le nombre d'unités centrales sur le banc d'essais moteur (1 PC = supervision + contrôle moteur). D'autre part, ce concept répond au besoin de centraliser les données au sein d'une unique plate-forme. Il n'est plus nécessaire de disposer d'une électronique de communication entre la plate-forme informatique de supervision et celle du contrôle moteur. Toutes les données recueillies par l'utilisateur sont disponibles au sein d'une seule machine et sont donc parfaitement corrélées.

Ce concept, décrit ci-dessus sur la base d'une fonction rapportée de contrôle moteur, peut être appliqué à toute autre fonction développée sous la forme d'un modèle MATLAB®/Simulink® compilable pour l'OS utilisé. L'exemple d'une régulation d'un équipement, tel que le frein moteur, en est une parfaite illustration.

### Fonctionnement du système de supervision (SS)

Le banc d'essais moteur (BEM) est associé à un système de pilotage (SS) généralement en charge de procéder aux opérations suivantes :
- acquisition des données et contrôle des consignes du moteur (BAG, AF, BCC) ;
- pilotage et régulation du frein ou de la génératrice (FG) ;
- automatisation et définition des séquences des essais moteurs ;
- gestion et centralisation des sécurités du banc d'essais moteur (souvent sous la responsabilité directe d'un automate (AUT) dédié).

Ces opérations, représentées par des flèches sur la figure 1, sont réalisées de la façon suivante :
- l'acquisition des données moteur est réalisée par les interfaces de conditionnement et de mise en forme électronique des entrées (IEE) et également par une communication numérique avec les équipements du banc d'essais moteur (ex : baie d'analyse de gaz (BAG), fumimètre (AF) pour l'analyse de l'opacité des fumées et balance de consommation du carburant (BCC)). L'acquisition de l'état du système à travers ces interfaces hétérogènes (cartes d'acquisitions, liaisons numériques, bus de terrain, etc...) est gérées par des modules indépendants : les pilotes.
- le contrôle des consignes du moteur est réalisé par des étages de puissance et de mise en forme électronique des sorties (IEMF) ;
- le contrôle des consignes des équipements du banc d'essais moteur est réalisé par une communication numérique avec ces équipements (MCN) : sélection des gammes, remplissage de seaux, etc. ;
- le pilotage et la régulation du frein (ou de la génératrice) sont réalisés par les interfaces électroniques d'E/S (IEE et IEMF) et/ou une communication numérique spécifique (MCN) ;
- l'automatisation et la définition des séquences des essais moteurs sont intrinsèques au logiciel de supervision (STR). Les configurations des essais moteur sont réalisées sous forme d'objets métiers (balances de consommation, automates, cycles normalisés, etc...) qui sont configurés une fois et réutilisables. Ces objets supportent l'héritage et le polymorphisme : la même application pourra tourner sans modification sur des bancs disposant d'équipements de type très différents.
- la gestion et la centralisation des sécurités du banc d'essais moteur sont réalisées par une communication numérique avec l'automate du banc (AUT).

Selon le mode de réalisation particulier du système de supervision de banc d'essais moteur comportant un système de contrôle moteur, le système de supervision est capable de générer automatiquement du code à partir d'une plateforme de type MATLAB® / Simulink®. Son architecture très ouverte fait que toutes les fonctionnalités du système peuvent être étendues très simplement, sans modifier ni même recompiler le code existant. Ainsi les modèles véhicules, conducteurs, et autres algorithmes peuvent passer d'une plateforme de type MATLAB® / Simulink® au banc en quelques minutes.

De plus, le système de supervision (SS) permet de réaliser :
- des calculs mathématiques (en temps réel) avec support des vecteurs, tableaux et cartographies ;
- une surveillance des alarmes et réactions en conséquence sur toutes les voies du système (y compris les calculs). Chaque voie peut disposer d'un nombre quelconque d'alarmes dont les seuils peuvent être des formules très complexes ;
- un pilotage et contrôle multitâches du process par un véritable macro langage temps réel extensible par les pilotes et rendant l'utilisation d'automates inutile sauf pour des sécurités vitales ;
- un stockage des données multi-fréquencielles manuel et automatique ;
- des affichages et des animations graphiques « multi-threads » optimisés pour le temps réel ;

Le système de supervision (SS) selon l'invention permet ainsi la supervision, le contrôle et l'acquisition en temps réel à des fréquences allant jusqu'à 10kHz (voies illimitées), de l'état du système. Son domaine d'utilisation va de la supervision classique jusqu'aux bancs de tests, en passant par la supervision d'un ensemble de plates-formes, et le contrôle moteur.

## Revendications

1. Système d'acquisition et de pilotage (SS) en temps réel de bancs d'essais moteurs comportant une plate-forme informatique (PC), un environnement d'exploitation logicielle (OS) associé à un module temps réel (MTR), comportant les éléments suivants :
- un fichier comportant des descriptions (FD) d'équipements et de pilotes associés à différents bancs d'essais moteur ;
- un ensemble de pilotes logiciels (PL) de gestion d'équipements de banc moteur, indépendants dudit environnement d'exploitation logicielle (OS) et de ladite plate-forme informatique (PC) ;
- un éditeur de configurations d'essai (EDIT) décrivant des conditions d'acquisition et de pilotage d'un essai moteur, lesdites configurations étant indépendantes desdits pilotes logiciels (PL) et desdits équipements de banc moteur ;
- un logiciel de supervision temps réel (STR) configuré pour lire des informations dudit fichier de description (FD), et pour exécuter en temps réel des configurations d'essais issues dudit éditeur en réalisant un chargement de pilotes logiciels requis ; et dans lequel
- lesdits pilotes logiciels (PL) de gestion d'équipements de banc moteur communiquent en temps réel avec ledit logiciel de supervision temps réel (STR).

2. Système d'acquisition et de pilotage (SS) selon la revendication 1, dans lequel une configuration d'essai éditée par ledit éditeur (EDIT) est définie au moyen de fonctions génériques de banc d'essais moteur.

3. Système d'acquisition et de pilotage (SS) selon l'une des revendications 1 et 2, dans lequel ledit fichier de description (FD) est au format XML (eXtensible Markup Language).

4. Système d'acquisition et de pilotage (SS) selon l'une des revendications 1 à 3, dans lequel l'éditeur de configuration d'essai (EDIT) utilise des schémas au format XML (eXtensible Markup Language).

5. Système d'acquisition et de pilotage (SS) selon l'une des revendications 1 à 4, dans lequel ledit système comporte en sus un système de contrôle moteur.

6. Système d'acquisition et de pilotage (SS) selon la revendication 5, dans lequel ledit système de contrôle moteur comporte un module de génération automatique de pilote de contrôle de moteur adapté à mettre en relation un moteur et ledit logiciel (STR).

7. Système d'acquisition et de pilotage (SS) selon la revendication 6, dans lequel ledit module de génération automatique de pilote de contrôle de moteur comporte :
- un module de génération de modèle de contrôle moteur ;
- un module de compilation de modèle de contrôle moteur.

8. Système d'acquisition et de pilotage (SS) selon l'une des revendications 6 et 7, dans lequel ladite plate-forme informatique (PC) est configurée pour partager sa ressource processeur entre des tâches de supervision de bancs d'essais moteurs et des tâches d'interprétation dudit pilote de contrôle.

## Patentansprüche

1. Verfahren zur Erfassung und Steuerung (SS) von Motorprüfständen in Echtzeit, umfassend eine Informatikplattform (PC), eine Software-Umgebung (OS), die einem Echtzeitmodul (MTR) zugeordnet ist, umfassend die folgenden Elemente:
- eine Datei, umfassend Beschreibungen (FD) von Ausrüstungen und Treibern, die verschiedenen Motorprüfständen zugeordnet sind;
- eine Gesamtheit von Software-Treibern (PL) zur Steuerung von Motorprüfausrüstungen, die von der Software-Umgebung (OS) und der Informatikplattform (PC) unabhängig sind;
- einen Prüfkonfigurationseditor (EDIT), der Bedingungen zur Erfassung und Steuerung eines Motorprüfstandes beschreibt, wobei die Konfigurationen von den Software-Treibern (PL) und den Motorprüfausrüstungen unabhängig sind;
- eine Echtzeit-Überwachungssoftware (STR), die dazu vorgesehen ist, Informationen der Beschreibungsdatei (FD) zu lesen, und in Echtzeit von dem Editor ausgehende Prüfkonfigurationen auszuführen, wobei ein Laden von erforderlichen Software-Treibern erfolgt; und wobei
- die Software-Treiber (PL) zur Steuerung von Motorprüfausrüstungen in Echtzeit mit der Echtzeit-Überwachungssoftware (STR) kommunizieren.

2. System zur Erfassung und Steuerung (SS) nach Anspruch 1, bei dem eine von dem Editor (EDIT) editierte Prüfkonfiguration mit Hilfe von generischen Motorprüfstandfunktionen definiert wird.

3. System zur Erfassung und Steuerung (SS) nach einem der Ansprüche 1 und 2, bei dem die Beschreibungsdatei (FD) im XML-Format (eXtensible Markup Language) ist.

4. System zur Erfassung und Steuerung (SS) nach einem der Ansprüche 1 bis 3, bei dem der Prüfkonfigurationseditor (EDIT) Schemata im XML-Format (eXtensible Markup Language) verwendet.

5. System zur Erfassung und Steuerung (SS) nach einem der Ansprüche 1 bis 4, wobei das System zusätzlich ein Motorkontrollsystem umfasst.

6. System zur Erfassung und Steuerung (SS) nach Anspruch 5, bei dem das Motorkontrollsystem ein Modul zur automatischen Generierung eines Motorkontrolltreibers umfasst, der geeignet ist, einen Motor und die Software (STR) in Relation zu setzen.

7. System zur Erfassung und Steuerung (SS) nach Anspruch 6, bei dem das Modul zur automatischen Generierung eines Motorkontrolltreibers umfasst:
- ein Modul zur Erzeugung eines Motorkontrollmodells;
- ein Modul zur Zusammenstellung eines Motorkontrollmodells.

8. System zur Erfassung und Steuerung (SS) nach einem der Ansprüche 6 und 7, bei dem die Informatikplattform (PC) dazu vorgesehen ist, ihre Prozessorressource zwischen Überwachungsaufgaben von Motorprüfständen und Interpretationsaufgaben des Kontrolltreibers aufzuteilen.

## Claims

1. A real-time acquisition and control system (SS) for engine test beds comprising a computer platform (PC), a software operating environment (OS) associated with a real-time module (MTR), comprising the following elements:
- a file comprising descriptions (FD) of equipments and drivers associated with various engine test beds,
- a set of software drivers (PL) for engine test bed equipment management, independent of said software operating environment (OS) and of said computer platform (PC),
- a test configuration editor (EDIT) describing engine test acquisition and control conditions, said configurations being independent of said software drivers (PL) and of said engine test bed equipments,
- a real-time supervision software (STR) configured to read information from said description file (FD) and for real-time execution of the test configurations from said editor by carrying out loading of the required software drivers; and wherein
- said software drivers (PL) for engine test bed equipment management communicate in real time with said real-time supervision software (STR).

2. An acquisition and control system (SS) as claimed in claim 1, wherein a test configuration edited by said editor (EDIT) is defined by means of generic engine test bed functions.

3. An acquisition and control system (SS) as claimed in any one of claims 1 and 2, wherein said description file (FD) is in XML (eXtensible Markup Language) format.

4. An acquisition and control system (SS) as claimed in any one of claims 1 to 3, wherein the test configuration editor (EDIT) uses XML (extensible Markup Language) format schema data.

5. An acquisition and control system (SS) as claimed in any one of claims 1 to 4, wherein said system further comprises an engine control system.

6. An acquisition and control system (SS) as claimed in claim 5, wherein said engine control system comprises a module for automatic generation of an engine control driver suited to communicate an engine with said software (STR).

7. An acquisition and control system (SS) as claimed in claim 6, wherein said automatic engine control driver generation module comprises:
- an engine control model generation module,
- an engine control model compiler module.

8. An acquisition and control system (SS) as claimed in any one of claims 6 and 7, wherein said computer platform (PC) is configured to share its processor resource between engine test bed supervision tasks and interpretation tasks of said control driver.
